# EUROPEAN PATENT SPECIFICATION

(11) **EP 1 200 248 B1**
(45) Date of publication and mention of the grant of the patent: **16.04.2003**
(21) Application number: 99934024.3
(22) Date of filing: 13.07.1999
(51) Int. Cl.: B29D 31/00, B29C 43/36, B29D 30/48, B29C 70/46

(54) **BEAD CURING FINGER MOLD**
WULSTVULKANISIERFORM MIT FINGERN
MOULE A DOIGTS POUR LE TRAITEMENT DE TALON

(43) Date of publication of application: 02.05.2002
(73) Proprietor: THE GOODYEAR TIRE & RUBBER COMPANY, Akron, Ohio 44316-0001 (US)
(72) Inventor: REX, William, Allen, Doylestown, OH 44230 (US); CONGER, Kenneth, Dean, Stow, OH 44303 (US); WILSON, Brian, Joseph, Akron, OH 44303 (US)
(74) Representative: Leitz, Paul
(86) International application number: US9915940
(87) International publication number: WO01003912

(56) References cited:
- US-A- 4 510 113
- PATENT ABSTRACTS OF JAPAN vol. 009, no. 003 (M-349), 9 January 1985 (1985-01-09) & JP 59 155028 A (SUMITOMO GOMU KOGYO KK), 4 September 1984 (1984-09-04)

## Description

### Technical Field

This invention related to molding a tire bead and especially to curing the rubber coating on the bead wires of a bead bundle which is held in a predetermined shape. The bead wires are held in place during the vulcanization so that when the bead ring is placed in a mold for injection molding of an apex on the bead, the mold will not be damaged by out of place wires. The bead bundle is also cured in a circular shape so that problems with pinching out of round beads are avoided during the closing of the bead apex mold.

### Background Art

Heretofore as shown and described in U.S. Patent No. 5,798,127, a bead bundle of rubber coated bead wires has been placed in an apex mold and held in position by blades engaging the radially inner surface of the tire bead bundle. The apex-bead assembly is then formed by injection of rubber into the apex mold cavity of the apex mold. If the bead wires extend outwardly from the bead bundle, the mold may be damaged during closing causing shut down and costly repairs. With this method the unvulcanized bead bundle may be changed in shape by handling before placing in the apex mold. Also the bead bundle may be distorted and come apart during the injection process when rubber is being injected past the bead at high velocity and with great force.

In U.S. Patent No. 5,262,115, an apex bead assembly mold for injection molding the apex assembly is shown where the rubber coated bead bundles are held in place on a cylindrical core by spaced-apart coaxial round rings arranged in side by side relation and engaging the axially extending inner surfaces and the radially extending inner surfaces of the beads so that when half molds are mounted around the core with the beads held in place, apex portions may be injection molded. Thereafter, the mold halves are removed and the bead apex assemblies pulled off the rings. During the injection process the unprotected bead bundle of unvulcanized rubber may be distorted or come apart due to high velocity movement of the rubber past of the bead.

### Disclosure of the Invention

This invention relates to a mold for heating and enclosing a circular member comprising a first mold member, a second mold member movable into engagement with the first mold member to provide a mold cavity characterized by the first mold member having a plurality circumferentially spaced first fingers, the second mold member having a plurality of circumferentially spaced second fingers movable into meshing engagement with the first fingers upon closing of the mold by movement of the first mold member towards the second mold member providing a circular mold cavity for the circular member.

This invention further relates to a bead curing finger mold characterized by a plurality of circumferentially spaced lower fingers disposed in a lower ring, a plurality of circumferentially spaced upper fingers disposed in an upper ring, the lower ring being positioned in a generally horizontal position for supporting a bead bundle, and the upper ring being positioned over the lower ring with the lower fingers interposed between the upper fingers in a closed position of the mold for containing and guiding the bead bundle and providing spaces along the lower fingers and the upper fingers to accommodate variations in size of the bead bundle.

This invention is also directed to the construction of a tire bead comprising multiple revolutions of metal wires coated with rubber and wound in a circular configuration to form a bead bundle characterized by the bead bundle being cured in a bead curing finger mold having a plurality of circumferentially spaced lower fingers disposed in a lower ring in a generally horizontal lower position for supporting the bead bundle, a plurality of circumferentially spaced upper fingers disposed in a generally horizontal upper ring positioned over the lower ring with the lower fingers interposed between the upper fingers in the closed position of the mold for containing and guiding the wires of the bead bundle and providing spaces along the lower fingers and the upper fingers to accommodate variations in size of the bead bundle during vulcanization of the bead upon application of heat to bead curing finger mold.

### Brief Description of Drawings

Fig. 1 is a front view in perspective of a finger mold embodying the invention shown mounted in a press.

Fig. 2 is an elevation with parts broken away of the upper and lower mold halves shown in Fig. 1 removed from the press with the bead ring shown lifted from the lower mold.

Fig. 3 is a cross sectional view of the molds taken along the plane of line 3-3 in Fig. 2.

Fig. 4 is a plan view of the lower mold half taken along the plane of line 4-4 in Fig. 2.

Fig. 5 is an enlarged fragmentary sectional view of the spring for removing the bead from the upper mold half.

Fig. 6 is an enlarged fragmentary schematic sectional view of the upper and lower finger mold halves shown in Fig. 2 with the bead bundle held by the fingers without bottoming of the finger mold halves.

Fig. 7 is a view like Fig. 6 showing the bead ring after molding and before removal from the lower finger mold half.

### Detailed Description of the Invention

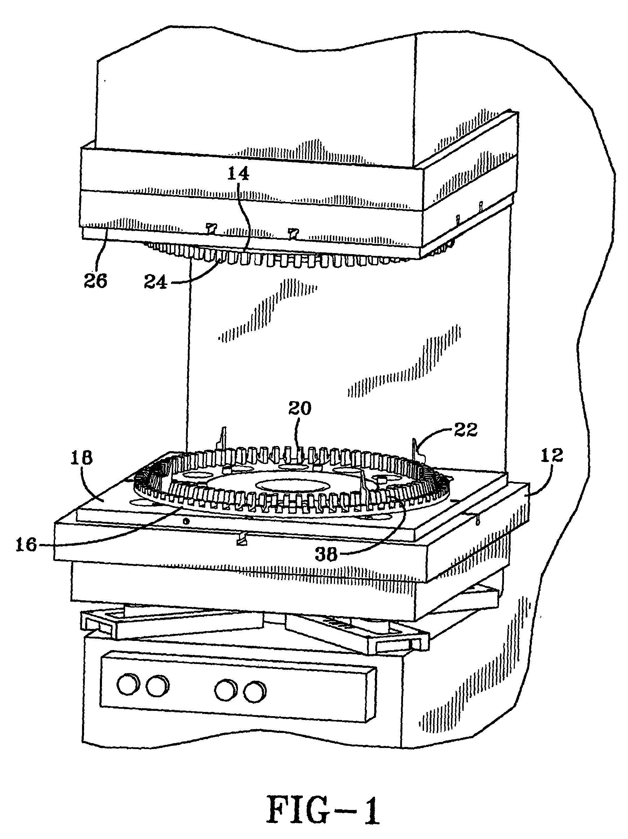

Referring to Fig. 1, a bead curing finger mold 10 embodying the invention is mounted in a hydraulic press 12 and has an upper finger mold half 14 and a lower finger mold half 16 movable together and apart upon opening and closing of the press. In the embodiment shown, the press 12 provides a pressure of 7 tons (7.11 metric tons) plus or minus 5 tons (5.08 metric tons) and the diameter of the bead is 22.50 inches (57.15 cm), however, with this press, medium radial truck tire beads of diameters having a range of 17.50 inches (44.45cm) to 24.5 inches (62.23 cm) may be molded with finger molds of this type.

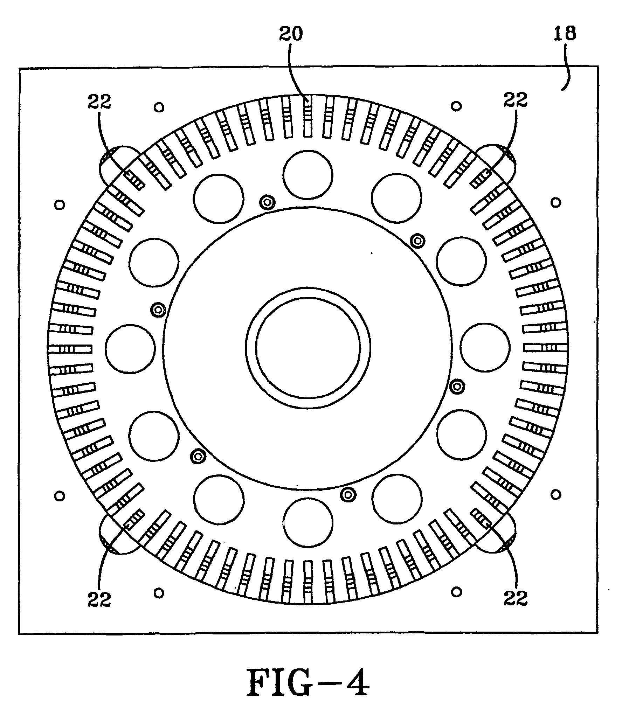

Referring to Figs. 1-4, the lower finger mold half 16 is mounted on a bottom press plate 18 and includes a plurality of circumferentially spaced apart lower fingers 20. Vertically movable ejector and bead holders 22 are mounted in the bottom press plate 18 at circumferentially spaced positions around the lower finger mold half 16 for holding a bead bundle 23 prior to closing the press 12 and ejecting the vulcanized bead after the curing cycle.

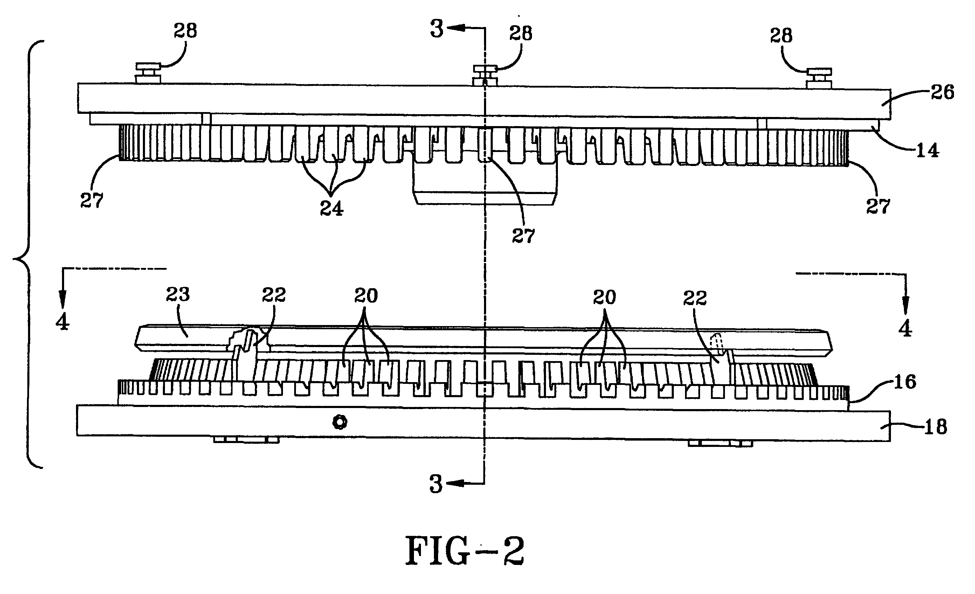

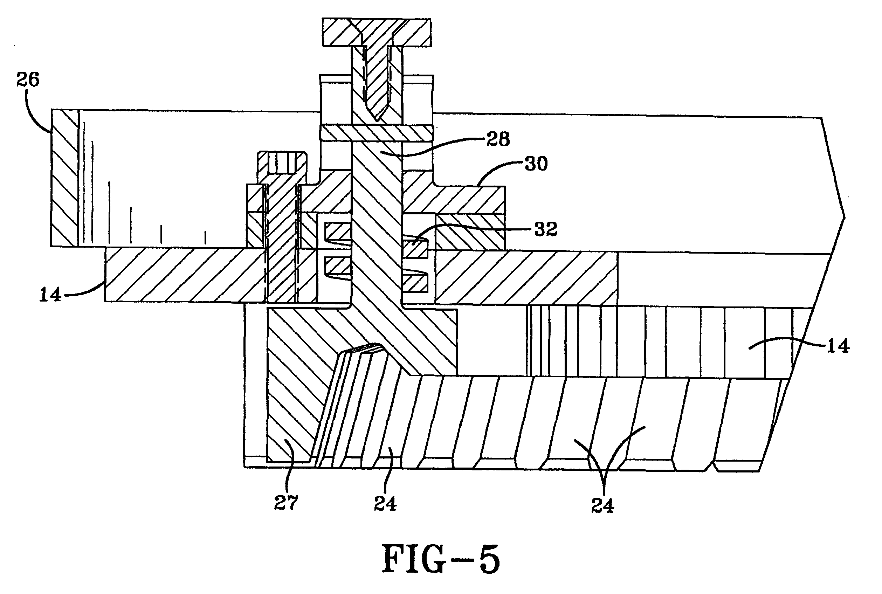

Referring to Figs. 2, 3 and 5, the upper finger mold half 14 has a plurality of circumferentially spaced upper fingers 24 mounted on a top press plate 26 of the press 12. Four spaced apart upper ejector fingers 27 are individually slidably supported and are spring loaded on the upper finger mold half 14 and have four posts 28 slidably mounted in collars 30, fastened to the upper finger mold half 14. Coil springs 32 are disposed between the collars 30 and the upper ejector fingers 27 to urge the ejector fingers downward into engagement with the bead bundle 23 to eject the bead bundle and separate the bead bundle from the upper mold half 14 as the mold 10 opens. In operation, the press 12 is opened to the position shown in Fig. 1 with the ejector and bead holders 22 in a position above the lower finger mold half 16. The bead bundle 23 is then placed over the lower fingers 20 on the bead holders 22. The bead bundle 23 comprises a ring of bead wires wound and coated with rubber in a bead ring in a manner well-known in the art. The bottom press plate 18 is then raised vertically lifting the bead bundle 23 off the ejector and bead holders 22. As shown in Fig. 7, tapered side surfaces 38 of the lower fingers 20 preferably have the same slope as a bead surface 40 relative to the axial direction A-A, which in this embodiment is an angle X of 15 degrees. However, in other embodiments, this angle may range from 0 to 45 degrees. The angle X is normally the same angle as the angle of the surface of the rim of the wheel on which the tire having this bead bundle 23 is mounted.

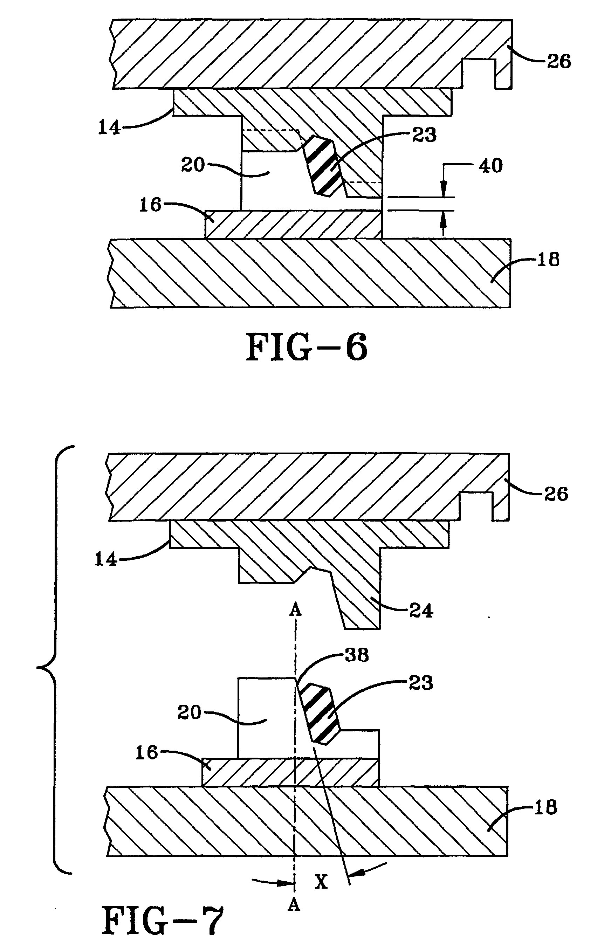

The press 12 is closed with the bottom mold plate 18 raised into a seating position with the top press plate 26. The lower finger mold half 16 is raised into position so that the lower fingers 20 are in meshing engagement with the upper fingers 24 as shown in Fig. 6. Steam or other heat transmitting material may then be provided in the press for vulcanizing the bead bundle 23 into a compact bead.

As shown in Figs. 6 and 7, during the closing operation the movement of the lower finger mold half 14 upward towards the upper finger mold half 14 is stopped by the compression of the bead bundle 23. There is no bottoming out of the upper finger mold half 14 against the lower finger mold half 16. This is advantageous because it provides a compact bead ring even though there may be variations in the size of the bead bundle 23. Variations may be accommodated in spaces 40 at the edges of the upper fingers 24 and lower fingers 20.

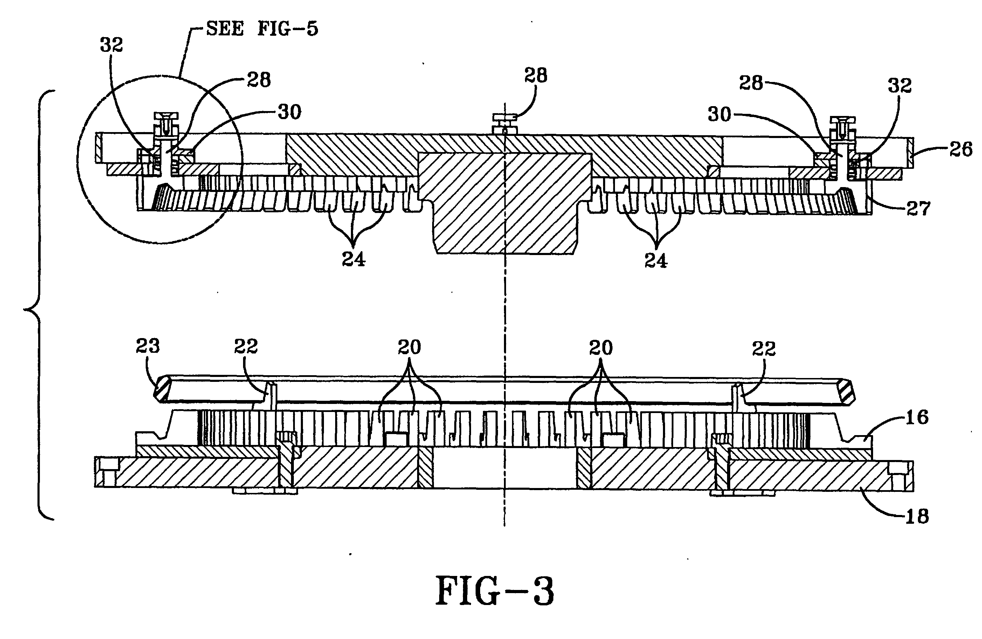

After vulcanization, the press 12 is opened and the springs 32 urge the ejector fingers 27 downward ejecting the bead bundle 23 as the press 12 opens. The ejector and bead holders 22 protrude through the lower finger mold half 16 and lift the vulcanized bead bundle 23 to the position shown in Figs. 2 and 3 as the bottom mold plate 18 is lowered.

While a certain representative embodiment and details have been shown for the purpose of illustrating the invention, it will be apparent to those skilled in the art that various changes and modifications may be made therein without departing from the scope of the invention defined in the claims.

## Claims

1. A mold (10) for heating and enclosing a circular member (23) comprising an annular upper mold half (14), an annular lower mold half (16) movable into engagement with said upper mold half (14) to provide a mold cavity **characterized by** said upper mold half (14) having a plurality of circumferentially spaced upper fingers (24), said lower mold half (16) having a plurality of circumferentially spaced lower fingers (20) movable into meshing engagement with said upper fingers (24) upon closing of said mold (10) by movement of said lower finger mold half (16) towards said upper finger mold half (16) providing a circular mold cavity for said circular member.

2. The mold according to claim 1 wherein said upper fingers (24) and said lower fingers (20) have sloped edges for guiding and compressing said circular member (23) in a central position upon closing of said mold (10).

3. The mold according to claim 2 wherein said upper fingers (24) and said lower fingers (20) have molding surfaces providing a circumferentially continuous molding member surface of said mold (10) with a precise predetermined diameter of said circular member (10) upon closing of said mold (10).

4. The mold according to claim 3 wherein said circular member (23) is a tire bead having a plurality of wires wrapped in a bead bundle (23) and coated with a resilient rubber-like material and wherein there are means for heating said mold (10) for vulcanizing said resilient rubber-like material.

5. The mold according to claim 3 wherein said upper fingers (24) and said lower fingers (20) have extensions (22) extending beyond said molding surfaces for guiding said circular member (23) and providing recesses for receiving said extensions in the closed condition of said mold (10).

6. Method of curing a bead in a mold (10) **characterized by** providing a plurality of circumferentially spaced lower fingers (20) disposed in a lower finger mold half (16), a plurality of circumferentially spaced upper fingers (24) disposed in an upper finger mold half (16), positioning said lower finger mold half in a generally horizontal position for supporting a bead bundle (23), and positioning said upper finger mold half (14) over said lower finger mold half (16) with said lower fingers (20) being interposed between said upper fingers (24) in a closed position of said mold (10) for containing and guiding said bead bundle (23) and providing spaces along said lower fingers (20) and said upper fingers (24) to accommodate variations in size of said bead bundle (23).

7. The method according to claim 6 wherein said lower finger mold half (16) is raised to close said mold (10) and wherein said upper finger mold half (14) has spaced apart spring loaded ejector fingers (27) for retracting upon closing of said mold (10) and for extension upon opening of said mold to transfer said bead bundle (23) to said lower finger mold half (16).

8. The method according to claim 6 wherein said lower finger mold half (16) has circumferentially spaced apart ejectors and bead holders (22) extending upwardly through said lower finger mold half (16) for holding said bead bundle (23) in the lower position of said lower finger mold half prior to closing of said mold and ejecting said bead bundle upon lowering of said upper mold half (14) after vulcanization of said bead bundle.

9. The method according to claim 6 wherein said lower fingers (20) and said upper fingers (24) have tapered bead bundle engaging surfaces (38) in converging relationship upon closing movement of said upper finger mold half (14) and said lower finger mold half (16) for compressing said metal wires during closing of said bead curing finger mold (10).

10. The method according to claim 9 wherein said lower fingers (20) and said upper fingers (24) have radially extending surfaces for overlapping said bead (23) during closing of said finger mold to limit the closing movement of said lower finger mold half (16) relative to said upper finger mold half (14) and determine the closing movement of the bead curing finger mold (10).

## Patentansprüche

1. Form (10) zum Erwärmen und Einschließen eines kreisförmigen Elements (23) mit einer ringförmigen oberen Formhälfte (14) und einer ringförmigen unteren Formhälfte (16), die in Eingriff mit der oberen Formhälfte (14) bewegbar ist, um einen Formhohlraum bereitzustellen, **dadurch gekennzeichnet, dass** die obere Formhälfte (14) eine Vielzahl von in Umfangsrichtung beabstandeten oberen Fingern (24) aufweist, und die untere Formhälfte (16) eine Vielzahl von in Umfangsrichtung beabstandeten unteren Fingern (20) aufweist, die beim Schließen der Form (10) durch eine Bewegung der unteren Fingerformhälfte (16) in Richtung der oberen Fingerformhälfte (16) in kämmendem Eingriff mit den oberen Fingern (24) bewegbar ist, um einen kreisförmigen Formhohlraum für das kreisförmige Element bereitzustellen.

2. Form nach Anspruch 1, wobei die oberen Finger (24) und die unteren Finger (20) abgeschrägte Ränder aufweisen, um das kreisförmige Element (23) beim Schließen der Form (10) in eine zentrale Position zu führen und zusammenzudrücken.

3. Form nach Anspruch 2, wobei die oberen Finger (24) und die unteren Finger (20) Formungsflächen aufweisen, die beim Schließen der Form (10) eine in Umfangsrichtung durchgehende Formungselementfläche der Form (10) mit einem genau vorbestimmten Durchmesser des kreisförmigen Elements (10) bereitstellen.

4. Form nach Anspruch 3, wobei das kreisförmige Element (23) ein Reifenwulst mit einer Vielzahl von Drähten ist, die zu einem Wulstbündel (23) gewickelt und mit einem elastischen kautschukartigen Material beschichtet sind, und wobei es Mittel zum Erwärmen der Form (10) zum Vulkanisieren des elastischen kautschukartigen Materials gibt.

5. Form nach Anspruch 3, wobei die oberen Finger (24) und die unteren Finger (20) Fortsätze (22) aufweisen, die sich über die Formungsflächen hinaus erstrecken, um das kreisförmige Element (23) zu führen und Ausnehmungen zur Aufnahme der Fortsätze im geschlossenen Zustand der Form (10) bereitzustellen.

6. Verfahren zum Vulkanisieren eines Wulstes in einer Form (10), **dadurch gekennzeichnet, dass** eine Vielzahl von in Umfangsrichtung beabstandeten unteren Fingern (20), die in einer unteren Fingerformhälfte (16) angeordnet sind, und eine Vielzahl von in Umfangsrichtung beabstandeten oberen Fingern (24), die in einer oberen Fingerformhälfte (16) angeordnet sind, vorgesehen wird, die untere Fingerformhälfte in einer im Allgemeinen horizontalen Position positioniert wird, um ein Wulstbündel (23) zu unterstützen, und die obere Fingerformhälfte (14) über der unteren Fingerformhälfte (16) positioniert wird, wobei die unteren Finger (20) in einer geschlossenen Position der Form (10) zwischen den oberen Fingern (24) angeordnet werden, um das Wulstbündel (23) zu halten und zu führen und Zwischenräume entlang der unteren Finger (20) und der oberen Finger (24) bereitzustellen, um Abweichungen der Größe des Wulstbündels (23) auszugleichen.

7. Verfahren nach Anspruch 6, wobei die untere Fingerformhälfte (16) angehoben wird, um die Form (10) zu schließen, und wobei die obere Fingerformhälfte (14) voneinander beabstandete, über Federn vorbelastete Ausstoßerfinger (27) zum Zurückziehen beim Schließen der Form (10) und zum Ausfahren beim Öffnen der Form aufweist, um das Wulstbündel (23) zur unteren Fingerformhälfte (16) zu überführen.

8. Verfahren nach Anspruch 6, wobei die untere Fingerformhälfte (16) in Umfangsrichtung voneinander beabstandete Ausstoßer und Wulsthalter (22) aufweist, die sich durch die untere Fingerformhälfte (16) nach oben erstrecken, um das Wulstbündel (23) vor dem Schließen der Form in der unteren Position der unteren Fingerformhälfte zu halten und das Wulstbündel beim Absenken der oberen Formhälfte (14) nach der Vulkanisation des Wulstbündels auszustoßen.

9. Verfahren nach Anspruch 6, wobei die unteren Finger (20) und die oberen Finger (24) abgeschrägte Wulstbündeleingriffsflächen (38) in einer konvergierenden Beziehung bei der Schließbewegung der oberen Fingerformhälfte (14) und der unteren Fingerformhälfte (16) aufweisen, um die Metalldrähte während des Schließens der Wulstvulkanisier-Fingerform (10) zusammenzudrücken.

10. Verfahren nach Anspruch 9, wobei die unteren Finger (20) und die oberen Finger (24) sich radial erstreckende Flächen zum Überlappen des Wulstes (23) während des Schließens der Fingerform aufweisen, um die Schließbewegung der unteren Fingerformhälfte (16) in Bezug auf die obere Fingerformhälfte (14) zu begrenzen und die Schließbewegung der Wulstvulkanisier-Fingerform (10) zu bestimmen.

## Revendications

1. Moule (10) pour chauffer et renfermer un élément circulaire (23) comprenant une moitié de moule supérieure annulaire (14), une moitié de moule inférieure annulaire (16) mobile pour entrer en contact avec ladite moitié de moule supérieure (14) dans le but de procurer une cavité de moule, **caractérisé par le fait que** ladite moitié de moule supérieure (14) possède plusieurs doigts supérieurs (24) espacés en direction circonférentielle, ladite moitié de moule inférieure (16) possédant plusieurs doigts inférieurs (20) espacés en direction circonférentielle mobiles pour entrer en contact d'engrènement avec lesdits doigts supérieurs (24) lors de la fermeture dudit moule (10) par le mouvement de ladite moitié de moule (16) comportant des doigts inférieurs en direction de ladite moitié de moule (14) comportant des doigts supérieurs pour obtenir une cavité de moule circulaire pour ledit élément circulaire.

2. Moule selon la revendication 1, dans lequel lesdits doigts supérieurs 24 et lesdits doigts inférieurs (20) possèdent des bords inclinés pour guider et comprimer ledit élément circulaire (23) dans une position centrale lors de la fermeture dudit moule (10).

3. Moule selon la revendication 2, dans lequel lesdits doigts supérieurs (24) et lesdits doigts inférieurs (20) possèdent des surfaces de moulage procurant une surface d'élément de moulage continue en direction circonférentielle dudit moule (10) avec un diamètre prédéterminé précis dudit élément circulaire (23) lors de la fermeture dudit moule (10).

4. Moule selon la revendication 3, dans lequel ledit élément circulaire (23) est un talon de bandage pneumatique possédant plusieurs fils métalliques enroulés pour obtenir un faisceau de talon (23) et enrobés d'une matière résiliente analogue à du caoutchouc, et dans lequel on prévoit un moyen pour chauffer ledit moule (10) à des fins de vulcanisation de ladite matière résiliente analogue à du caoutchouc.

5. Moule selon la revendication 3, dans lequel lesdits doigts supérieurs (24) et lesdits doigts inférieurs (20) possèdent des prolongements (22) s'étendant au-delà desdites surfaces de moulage pour guider ledit élément circulaire (23), des évidements étant prévus pour recevoir lesdits prolongements à l'état fermé dudit moule (10).

6. Procédé de vulcanisation d'un talon dans un moule (10), **caractérisé par** le fait de procurer plusieurs doigts inférieurs (20) espacés en direction circonférentielle disposés dans une moitié de moule contenant des doigts inférieurs, plusieurs doigts supérieurs (24) espacés en direction circonférentielle disposés dans une moitié de moule (14) contenant des doigts supérieurs, positionner ladite moitié de moule contenant des doigts inférieurs dans une position généralement horizontale pour supporter un faisceau de talon (23), et positionner ladite moitié de moule (14) contenant des doigts supérieurs par-dessus ladite moitié de moule (16) contenant des doigts inférieurs, lesdits doigts inférieurs (20) étant intercalés entre lesdits doigts supérieurs (24) dans la position fermée dudit moule (10) pour contenir et guider ledit faisceau de talon (23) et pour procurer des espaces le long desdits doigts inférieurs (20) et le long desdits doigts supérieurs (24) pour prendre en compte des variations de la dimension dudit faisceau de talon (23).

7. Procédé selon la revendication 6, dans lequel ladite moitié de moule (16) contenant des doigts inférieurs est soulevée pour fermer ledit moule (10), et dans lequel ladite moitié de moule (14) contenant des doigts supérieurs possède des doigts d'éjection (27) espacés les uns des autres et chargés par un ressort pour pouvoir se rétracter lors de la fermeture dudit moule (10) et pour pouvoir s'étendre lors de l'ouverture dudit moule dans le but de transférer ledit faisceau de talon (23) à ladite moitié de moule (16) contenant des doigts inférieurs.

8. Procédé selon la revendication 6, dans lequel ladite moitié de moule (16) contenant des doigts inférieurs possède des éjecteurs et des dispositifs de support de talons (22) espacés les uns des autres en direction circonférentielle, qui s'étendent vers le haut à travers ladite moitié de moule (16) contenant des doigts inférieurs pour maintenir ledit faisceau de talon (23) dans la position inférieure de ladite moitié de moule contenant des doigts inférieurs avant la fermeture dudit moule et pour éjecter ledit faisceau de talon lors de l'abaissement de ladite moitié de moule supérieure (14) après la vulcanisation dudit faisceau de talon.

9. Procédé selon la revendication 6, dans lequel lesdits doigts inférieurs (20) et lesdits doigts supérieurs (24) possèdent des surfaces (38) de mise en contact avec les faisceaux de talons qui présentent une forme conique et qui sont mises en relation de convergence lors du mouvement de fermeture de ladite moitié de moule (14) contenant des doigts supérieurs et de ladite moitié de moule (16) contenant des doigts inférieurs afin de comprimer lesdits fils métalliques lors de la fermeture dudit moule de vulcanisation de talon (10) contenant des doigts.

10. Procédé selon la revendication 9, dans lequel lesdits doigts inférieurs (20) et lesdits doigts supérieurs (24) possèdent des surfaces s'étendant en direction radiale à des fins de chevauchement dudit talon (23) lors de la fermeture dudit moule contenant des doigts dans le but de limiter le mouvement de fermeture de ladite moitié de moule (16) contenant des doigts inférieurs par rapport à ladite moitié de moule (14) contenant des doigts supérieurs et dans le but de déterminer le mouvement de fermeture du moule de vulcanisation de talon (10) contenant des doigts.
